# EUROPEAN PATENT APPLICATION

(11) **EP 3 311 916 A1**
(43) Date of publication of application: **25.04.2018**
(21) Application number: 17151365.8
(22) Date of filing: 13.01.2017
(51) Int. Cl.: B01J 29/76, B01D 53/94, C01B 39/14

(54) **CATALYST AND MANUFACTURING METHOD OF CATALYST**

(30) Priority: 21.10.2016 KR 20160137785
(71) Applicant: Hyundai Motor Company, Seoul 06797 (KR); Kia Motors Corporation, Seoul 06797 (KR); Postech Academy-Industry Foundation, Pohang-si, Gyeongsangbuk-do 37673 (KR)
(72) Inventor: Kim, Pyung Soon, 16420 Gyeonggi-do (KR); Kim, Chang Hwan, 13526 Gyeonggi-do (KR); Ryu, Taekyung, 35000 Daejeon (KR); Jo, Donghui, 32555 Chungcheongnam-do (KR); Park, Gi Tae, 42176 Daegu (KR); Kim, Hyojun, 52433 Gyeongsangnam-do (KR); Nam, In-Sik, 37656 Gyeongsangbuk-do (KR); Hong, Suk Bong, 37673 Gyeongsangbuk-do (KR)
(74) Representative: Hoffmann Eitle

(57) **Abstract**

A catalyst according to an example embodiment includes an LTA zeolite having copper ions, wherein the weight ratio of copper to aluminum is from about 0.14 to about 0.58, and the weight ratio of silicon to aluminum of the LTA zeolite exceeds 1.

## Description

### BACKGROUND

### (a) Technical Field

The present disclosure relates to a catalyst and a method for manufacturing the same.

### (b) Description of the Related Art

In general, the exhaust gas of diesel vehicles contains noxious materials such as carbon monoxide, hydrocarbons, and nitrogen oxides ("NOx"). Nitrogen oxides cause environmental problems such as photochemical smog and acid rain, as well as human diseases. Therefore, there is a demand for improving engines and developing effective exhaust gas treatment technologies.

The most effective conventional technology for removing nitrogen oxides uses a selective catalytic reduction ("SCR") method. This method utilizes a reducing agent such as ammonia (NH₃), urea, hydrocarbon ("HC"), and the like, and various catalysts. Ammonia has been known to be effective in removing nitrogen oxides in stationary (i.e. non-moving) applications such as power plants and incinerators. Storing, transporting and using ammonia in mobile applications, such as in vehicles, however, poses problems. For mobile applications, urea has been known to be effective, as it is easily decomposed to ammonia by heat decomposition and a hydration reaction.

In the selective catalyst reduction method, zeolite-based catalysts such as copper (Cu)/zeolite having been effectively used.

The high temperature activity and thermal endurance of a catalyst for use in treatment of exhaust gas is very important.

The above information disclosed in this Background section is only for enhancement of understanding of the background of the disclosure and therefore it may contain information that does not form the prior art that is already known in this country to a person of ordinary skill in the art.

### SUMMARY OF THE DISCLOSURE

The present disclosure provides a catalyst for use in processing vehicle exhaust gas that can maintain activity and stability in a high temperature environment, and a method for manufacturing the same.

A catalyst according to an example embodiment includes a Linde Type A ("LTA") zeolite that includes copper ions, wherein the weight ratio of copper and aluminum is from about 0.14 to about 0.58, and the ratio of silicon to aluminum is greater than 1.

In a further example embodiment, the ratio of copper to aluminum may be from about 0.32 to about 0.48.

The weight content of copper in the LTA zeolite may be between about 0.5 wt% and 5 wt%.

In a further example embodiment, the ratio of silicon to aluminum is between about be 5 and about 30. In yet a further example embodiment, the ratio of silicon to aluminum is between about 15 and about 17.

The disclosure further provides an example embodiment of a method for manufacturing a catalyst. The method includes: preparing an LTA zeolite having a silicon to aluminum ratio exceeding 1; preparing an ion-containing LTA zeolite using the LTA zeolite; and preparing a copper-type LTA zeolite by performing copper ion exchange on the ion-containing LTA zeolite, wherein the weight ratio of copper to aluminum in the copper-type LTA zeolite is from about 0.14 to about 0.58.

In the example method, the weight ratio of silicon to aluminum in the prepared LTA zeolite may be from about 5 to about 30.

In the example method, the ratio of copper to aluminum may be from about 0.32 to about 0.48.

In the example method, the content of copper may be from about 0.5 wt% to about 5 wt%.

In the example method, the step of preparing the ion-containing LTA zeolite may be performed by substituting ions in the LTA zeolite.

The step of preparing the ion-containing LTA zeolite may include reacting the LTA zeolite with an ammonium salt solution and then performing drying. The ammonium salt may be ammonium nitrate (NH₄NO₃).

The method for manufacturing the catalyst may further include, after the manufacturing of the copper-type LTA zeolite, thermally treating the copper-type LTA zeolite. The thermal treatment may be performed while increasing the temperature from about 400 to about 750 degrees Celsius at a rate of between about 1 to about 30 degrees Celsius/min. The heat treatment may be performed for about 1 to about 24 hours.

As described, the catalyst and the method for manufacturing the same can provide excellent high temperature stability, and nitrogen oxide can be effectively removed in a high-temperature environment.

### BRIEF DESCRIPTION OF THE DRAWINGS

FIG. 1 is a graph illustrating NOx purification performance of a copper-type LTA zeolite as a function of the weight ratio of copper to aluminum.
FIG. 2 illustrates NOx purification performance of copper-type LTA zeolites, each having a different weight ratio of copper to aluminum, after hydrothermal aging is performed at 850 °C for about 24 h.
FIG. 3 illustrates NOx purification performance of a copper-type LTA zeolite having a copper to aluminum weight ratio of 0.48, after hydrothermal aging is performed at 900 °C for different hours.

### DETAILED DESCRIPTION OF THE EMBODIMENTS

The present disclosure will be described more fully hereinafter with reference to the accompanying drawings, in which example embodiments of the invention are shown. As those skilled in the art would realize, the described embodiments may be modified in various different ways, all without departing from the spirit or scope of the present invention.

A method for manufacturing a catalyst according to an example embodiment includes preparing an LTA zeolite having a silicon to aluminum weight ratio greater than 1, preparing an ion-containing LTA zeolite substituting ions in the LTA zeolite, and preparing a copper-type LTA zeolite by performing copper ion exchange on the ion-containing LTA zeolite. The resulting copper-type LTA zeolite has a copper to aluminum weight ratio of a ratio of copper and aluminum from about 0.14 to about 0.58.

The LTA zeolite may be prepared with or without using a seed. The silicon to aluminum weight ratio for the prepared LTA zeolite exceeds 1. In a further example embodiment, the silicon to aluminum weight ratio may be from about 5 to about 50. Preferably, the silicon to aluminum weight ratio may be from about 5 to about 30. More preferably, the silicon to aluminum weight ratio may be greater than or equal to 8.

An example LTA zeolite manufacturing process using a seed is described below.

To prepare the LTA zeolite, an LTA seed may be mixed in a mixture of aluminum hydroxide (Al(OH)₃) and tetraethyl orthosilicate (Si(OC₂H₅)₄). Specifically, a 1,2-dimethyl-3-(4-methylbenzyl)imidazolium hydroxide aqueous solution and aluminum hydroxide (Al(OH)₃) are mixed; the mixture is stirred a first time; and then tetramethylammonium hydroxide pentahydrate is added and then stirred a second time to prepare a first mixture.

The first mixture comprises from about 20 to about 35 wt% 1,2-dimethyl-3-(4-methylbenzyl)imidazolium hydroxide, about 1 to about 2 wt% aluminum hydroxide (Al(OH)₃), about 1 to about 5 wt% tetramethylammonium hydroxide pentahydrate, and a residual quantity of water. The first and second stirrings of the mixture may each take from about 0.5 to about 1.5 h.

Tetraethyl orthosilicate (TEOS) (Si(OC₂H₅)₄) is then mixed into the first mixture, and the resulting mixture is stirred a third time. The LTA seed is then added into the mixture and stirred a fourth time to prepare a second mixture.

TEOS may be added to the mixture in an amount of from about 30 to about 35 wt% of the total mixture; the amount of LTA seed may be from about 2 to about 6 wt% with respect to the total weight of the silicon included in the LTA zeolite.

The third stirring may take from about 2 to about 4 h, and the fourth stirring may take from about 20 to about 28 h.

Next, the second mixture is sufficiently heated to cause hydrolysis of the TEOS, and ethanol and water generated from the hydrolysis of TEOS are evaporated resulting in a third mixture. In a further example embodiment, the second mixture may be heated at a temperature of from between about 70 °C and about 90 °C.

Next, a hydrofluoric aqueous solution is mixed in the third mixture, and a fourth mixture is prepared through heating, cleansing, and drying processes.

The third mixture may be heated for a constant time period at a temperature of from about 150 °C to about 200 °C. The cleansing process may be iteratively performed. The drying process may be performed at room temperature.

Next, the fourth mixture is heat treated to remove organic material and to generate the LTA zeolite. The heat treatment may be performed at a temperature of from between about 500 °C and about 700 °C for about 6 to about 10 h. The resulting LTA zeolite has a silicon to aluminum weight ratio of from about 5 to about 30 in the present example embodiment.

An example method for manufacturing the LTA zeolite without using a seed is described below.

In a plastic beaker, about 0.1 to about 1.0 moles of aluminium hydroxide and about 0.0 to about 0.2 moles of tetramethylammonium hydroxide (hereinafter, referred to as "TMAOH") are added to about 0.1 to about 0.2 mole of 2-Dimethyl-3- (4-methylbenzyl) imidazolium hydroxide (hereinafter, referred to as "12DM3 (4MB) IOH"), which is an organic structure-directing agent, and then sufficiently stirred. Next, with respect to the content of the reactant, tetraethyl orthosilicate (hereinafter, referred to as TEOS) is mixed to be a ratio of 1 mole and then sufficiently stirred.

Next, the solution is heated at about 60 to about 100 degrees Celsius to remove ethanol generated during the hydrolysis of TEOS. The amount of water generated during this hydrolysis of TEOS is from about 0 to about 10 mole. Then, about 0.1 to about 1.0 mole of hydrogen fluoride (HF) is added and then sufficiently stirred resulting in a reaction mixture having the composition shown Chemical Formula 1.

[Chemical Formula 1] 1 SiO₂: 0.0 - 0.2 Al (OH)₃: 0.0 - 0.2 TMAOH : 0.1 -1.0 R : 0.1 -1.0 HF : 0 - 10 H₂O

wherein R is 12DM3 (4MB)IOH.

The reaction mixture is transferred to a teflon reactor in a container made of stainless steel, and heated at from about 100 to about 200 degrees C for about 0.1 to about 14 days to obtain an LTA zeolite. The silicon to aluminum weight ratio of the LTA zeolite manufactured using the above-described process may be from about 5 to about 50.

The methods for manufacturing the LTA zeolite are not limited to the above-described method.

Next, a method for preparing an ion- containing LTA zeolite catalyst according to an example embodiment using the above-prepared LTA zeolite will be described in detail.

First, ammonium salt is added to the LTA zeolite and the mixture is then refluxed. Cleansing and drying processes are next performed to prepare an LTA zeolite including NH₄⁺ ions (i.e., NH₄-type LTA zeolite).

In the example embodiment, the ammonium salt may be ammonium nitrate (NH₄NO₃).

The reflux process may be performed at a temperature of from between about 60 °C and about 100 °C for about 5 to about 7 h.

In the present example embodiment, the ions are ammonium ions, but other ions could be used. That is, use of other ions and ion salt is also included in the scope of the present invention.

Next, the ion-containing LTA zeolite undergoes copper (Cu) ion exchange to obtain a copper-type LTA zeolite. In the copper-type LTA zeolite manufactured according to the present disclosure, the weight ratio of copper to aluminum may be from about 0.14 to about 0.58. In a further example embodiment, the copper to aluminum ratio may be from about 0.32 to about 0.48.

In a separate example embodiment, the weight ratio of copper to aluminum may be from about 0.1 to about 0.7. The ratio can be appropriately adjusted based on the environmental conditions where the catalyst is used.

In addition, the content of copper is between about 0.5 wt% and about 5 wt%. In a further example embodiment, the copper content may be from about 2.0 wt% to about 3.0 wt%.

In a previous step, a dried NH₄-type LTA zeolite including NH₄⁺ ions undergoes copper (Cu) ion exchange resulting in a copper-type LTA zeolite including copper ions.

For the copper ion exchange, the dried NH₄-type LTA zeolite including NH₄⁺ ions is injected into a copper precursor solution such as copper acetate monohydrate, copper nitride, copper nitrate, copper sulfate, and the like, and stirred. Next, cleansing and drying processes are performed to obtain the copper-type LTA zeolite.

Next, the copper-type LTA zeolite is heated in an oven with a gradually increasing temperature, and a heat treatment process is performed to manufacture the catalyst according to the example embodiment of the present disclosure.

For the heat treatment of the copper-type LTA zeolite, the temperature may be increased from about 400 to about 750 °C at a rate of about 1 to about 30 degrees C/min. The heat treatment may be performed from about 1 to about 24 h.

In the resulting copper-type LTA zeolite, the weight ratio of copper to aluminum may be from about 0.14 to about 0.58. In a further example embodiment, the copper to aluminum ratio may be form about 0.32 to about 0.48.

The stated weight ratios of copper to aluminum provide excellent NOx purification performance while maintaining thermal stability.

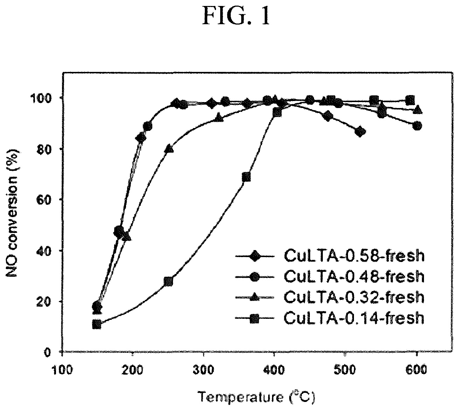

FIG. 1 is a graph illustrating NOx purification performance of a copper-type LTA zeolite catalyst as a function of the ratio of copper to aluminum. For the purposed of this graph, the ratio of silicon to aluminum in the LTA zeolite is 16.

Referring to FIG. 1, when the ratio of copper to aluminum was between about 0.14 and about 0.58, the catalyst had high NOx purification performance at a temperature over 400 °C. In addition, when the ratio of copper and aluminum was between 0.32 and 0.58, the catalyst had high NOx purification performance at a temperature over 200 °C.

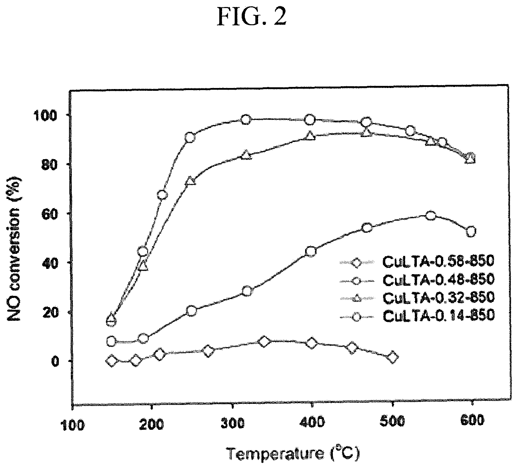

FIG. 2 shows NOx purification performance of copper-type LTA zeolite catalysts, each having a different ratio of copper to aluminum, after performing hydrothermal aging at 850 °C for about 24 h.

Referring to FIG. 2, when the ratio of copper and aluminum is between about 0.32 and about 0.48, more than 70% of NOx was removed within a reaction temperature range of from about 250°C to about 600 °C.

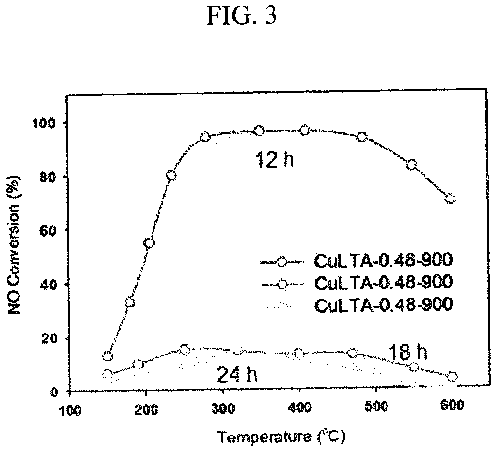

Subsequently, hydrothermal aging of the copper-type LTA zeolite catalyst having a copper to aluminum ratio of about 0.48 was performed at 900 °C for different time periods. FIG. 3 shows NOx purification performance after the hydrothermal aging. The hydrothermal aging was performed by adding 10 wt% of water.

Referring to FIG. 3, the copper-type LTA zeolite catalyst having a copper to aluminum ratio of about 0.48 had high NOx purification capacity even after hydrothermal aging was performed at 900 °C for 12 h. However, when the hydrothermal aging was performed for 18 h or 24 h, NOx purification performance decreased significantly.

An example embodiment of a catalyst is described below. The catalyst according to the example embodiment includes an LTA zeolite having copper ions, a weight ratio of copper to aluminum of from about 0.14 to about 0.58, and a silicon to aluminum weight ratio exceeding 1. In a further example embodiment, the weight ratio of copper to aluminum may be between about 0.32 and about 0.48.

The ranges above are merely examples and are not intended to limit the disclosure. The weight ratio of copper to aluminum, for example, may be adjusted depending on the environment where the catalyst is used. In a further example embodiment, the weight ratio of copper to aluminum may be from about 0.1 to about 0.7.

In an example embodiment, the copper content may be from about 0.5 wt% to about 5 wt%. In another example embodiment, the copper content may be from about 0.85 wt% to about 3.3 wt%. In yet a further example embodiment, the copper content may be from about 2.0 wt% to about 3.0 wt%.

In an example embodiment, the silicon to aluminum weight ratio may be between from about 5 to about 30. In a further example embodiment, the silicon to aluminum weight ratio of the LTA zeolite may be from about 15 to about 17.

The catalyst according to the present example embodiment can be manufactured using the above-described catalyst manufacturing method.

The catalyst according to the present example embodiment can be used by being coated on a honeycomb carrier or a filter in a catalytic converter in a vehicle. The example embodiment of the catalyst can remove NOx in a exhaust gas at temperatures of 100 °C or higher.

As described, the copper-type LTA zeolite catalyst having a copper to aluminum weight ratio of from about 0.14 to about 0.58 has high NOx purification efficiency. In addition, when the weight ratio of copper to aluminum is between from about 0.32 to about 0.48, more than 70% of NOx is removed at a reaction temperature range of from about 250 to about 600 degrees C even after hydrothermal aging is performed at 850 degrees C for 24 h, and accordingly the copper-type LTA zeolite catalyst has high hydrothermal aging stability.

The copper-type LTA zeolite catalyst also can be used for selective catalyst reduction on a diesel particle filter (SCR on DPF) that requires hydrothermal aging stability. In this configuration, NOx can be purified by spraying urea during regeneration of the DPF. In addition, because thermal endurance is increased, the length of the DPF regeneration cycle can be increased, and accordingly, the amount of soot loading can be increased. Further, because the length of the DPF regeneration cycle is increased, fuel consumption efficiency can be improved.

While this invention has been described in connection with practical example embodiments, it is to be understood that the invention is not limited to the disclosed embodiments, but, on the contrary, is intended to cover various modifications and equivalent arrangements included within the spirit and scope of the appended claims.

## Claims

1. A catalyst comprising an LTA zeolite that includes copper ions,
wherein the weight ratio of copper to aluminum is from about 0.14 to about 0.58, and
the weight ratio of silicon to aluminum exceeds 1.

2. The catalyst of claim 1, wherein the weight ratio of copper and aluminum is from about 0.32 to about 0.48.

3. The catalyst of claim 1 or 2, wherein the copper content is 0.5 wt% to 5 wt% of the total catalyst weight.

4. The catalyst of any one of the preceding claims, wherein the silicon to aluminum weight ratio of the LTA zeolite is from about 5 to about 30.

5. The catalyst of claim 5, wherein the silicon to aluminum weight ratio of the LTA zeolite is from about 15 to about 17.

6. A method for manufacturing a catalyst, comprising:
preparing an LTA zeolite having a silicon to aluminum weight ratio exceeding 1;
preparing an ion-containing LTA zeolite using the LTA zeolite; and
preparing a copper-type LTA zeolite by performing copper ion exchange on the ion-containing LTA zeolite,
wherein the weight ratio of copper to aluminum in the copper-type LTA zeolite is from about 0.14 to about 0.58.

7. The method for manufacturing the catalyst of claim 6, wherein the silicon to aluminum weight ratio of the prepared LTA zeolite is from about 5 to about 30.

8. The method for manufacturing the catalyst of claim 6 or 7, wherein the weight ratio of copper to aluminum is from about 0.32 to about 0.48.

9. The method for manufacturing the catalyst of claim 6, 7 or 8, wherein the copper content is from about 0.5 wt% to about 5 wt% fo the entire weight of the catalyst.

10. The method for manufacturing the catalyst of anyone of claims 6 to 9 wherein the step of preparing the ion-containing LTA zeolite is performed by substituting ions in the LTA zeolite.

11. The method for manufacturing the catalyst of anyone of claims 6 to 9, wherein the step of preparing the ion-containing LTA zeolite comprises reacting the LTA zeolite with an ammonium salt solution and then drying.

12. The method for manufacturing the catalyst of claim 11, wherein the ammonium salt is ammonium nitrate (NH₄NO₃).

13. The method for manufacturing the catalyst of anyone of claims 6 to 12, further comprising, after the step of preparing the copper-type LTA zeolite, thermally treating the copper-type LTA zeolite.

14. The method for manufacturing the catalyst of claim 13, wherein the thermal treatment is performed by increasing the temperature from about 400 to about 750 degrees C at a rate of between about 1 to about 30 °C/min.

15. The method for manufacturing the catalyst of claim 13 or 14, wherein the heat treatment takes place for from about 1 to about 24 hours.
